# EUROPÄISCHE PATENTSCHRIFT

(11) **EP 3 510 969 B1**
(45) Veröffentlichungstag und Bekanntmachung des Hinweises auf die Patenterteilung: **27.09.2023**
(21) Anmeldenummer: 19154842.9
(22) Anmeldetag: 07.07.2005
(51) Int. Cl.: A61C 13/00, A61C 5/77

(54) **VERFAHREN ZUR KONSTRUKTION DER OBERFLÄCHE EINES AUS DREIDIMENSIONALEN DATEN BESTEHENDEN ZAHNERSATZTEILS UND CAD-SOFTWARE**
METHOD FOR THE PRODUCTION OF THE SURFACE OF A DENTAL RESTORATION CONSISTING OF 3D DATA AND CAD-SOFTWARE
PROCÉDÉ DE CONSTRUCTION DE LA SURFACE D'UNE PROTHÈSE DENTAIRE COMPOSÉE DE DONNÉES TRIDIMENSIONNELLES ET LOGICIELS DE CAO

(30) Priorität: 08.07.2004 DE 102004038136
(43) Veröffentlichungstag der Anmeldung: 17.07.2019
(62) Teilanmeldung aus: 05106163.8
(73) Patentinhaber: Sirona Dental Systems GmbH, 64625 Bensheim (DE)
(72) Erfinder: Ulrich, Orth, 64646 Heppenheim (DE); Willers, Ulf, 64343 Seeheim-Jungheim (DE); Wedler, Volker, 69493 Hirschberg (DE)
(74) Vertreter: Özer, Alpdeniz

(56) Entgegenhaltungen:
- EP-A- 1 252 867
- WO-A2-2004/044787

## Beschreibung

### Technisches Gebiet

Die Erfindung betrifft ein Verfahren zur Konstruktion der Oberfläche einer aus dreidimensionalen Daten bestehenden Krone sowie eine CAD-Software.

Für die Herstellung von ästhetischen und funktionalen Zahnrestaurationen ist es erforderlich, die direkte beziehungsweise spiegelbildliche Kopie einer oder mehrerer Zahnoberflächen zu erzeugen. Im Frontzahnbereich sollen die Labialflächen symmetrisch sein, damit ein ästhetischer Gesamteindruck entsteht. Im Seitenzahnbereich ist die Okklusion des entsprechenden Zahns der Gegenseite als Vorlage für die Kaufläche der Restauration geeignet.

### Stand der Technik

Mit bislang verwendeten Konstruktionsverfahren kann die Zahnoberfläche vor der Präparation oder eine künstlich durch Aufwachsen erzeugte Oberfläche in die Oberfläche der Restauration übertragen werden. Die dreidimensionalen Daten werden hierfür teilweise kopiert.

Bei der manuellen Erstellung hat der Zahntechniker im Frontzahnbereich versucht, die Labialfläche möglichst gut an den kontralateralen Zahn anzupassen. Dies gelingt mehr oder weniger gut, aber niemals exakt. Im Seitenzahnbereich orientiert sich der Zahntechniker an der Morphologie des Gebisses, auch am contralateralen Zahn. Es bleibt jedoch seinem manuellen Geschick überlassen, wesentliche Merkmale zu erfassen und zu berücksichtigen.

EP 1252867 A1 offenbart ein Verfahren zur Herstellung eines künstlichen Zahns, wobei mindestens eine Deckschicht, die im Wesentlichen das Aussehen eines fertigen künstlichen Zahns bestimmt, festgelegt wird. Dabei werden eine Basisschicht und eine Deckschicht variiert, um einen natürlichen Zahn möglichst nachzuahmen.

WO 2004044787 A2 offenbart ein Verfahren zur Herstellung eines Zahnersatzteils, wobei eine Außenfläche durch Optimierung eines generischen Zahnmodells des gewünschten Zahntyps an die Restzahnsubstanz, an die Gegenzähne und/oder Nachbarzähne angepasst wird.

### Offenbarung der Erfindung

Das Ziel der Erfindung wird erreicht durch das Verfahren zur Konstruktion der Oberfläche einer aus dreidimensionalen Daten bestehenden Krone gemäß Anspruch 1, und eine CAD-Software gemäß Anspruch 6.

Das Verfahren gemäß der Erfindung zur Konstruktion der Oberfläche eines Zahnersatzteils unter Verwendung von dreidimensionalen Daten einer Zahnoberfläche besteht darin, dass eine beliebige Zahnoberfläche eines gespeicherten Zahns zumindest als Teil der Oberfläche des herzustellenden Zahnersatzteils verwendet wird, wozu die Zahnoberfläche in ihrer Ausdehnung bestimmt wird und danach an einem gespeicherten Zahnersatzteil oder im Bereich einer als dreidimensionale Daten vorliegenden Präparationsstelle angeordnet wird. Die Lage der digitalen Zahnoberfläche in dem Zahnersatzteil oder an der Präparationsstelle ist dabei in mindestens einer Raumachse und/oder einer Drehrichtung bestimmbar, wobei eine Anordnung der festgelegten Zahnoberfläche an die Präparationsstelle stattfindet, wobei ausgehend von der Anordnung der festgelegten Oberfläche zu der Präparationsstelle eine Konstruktion des Zahnersatzteils mittelbar unter Verwendung der Daten der Präparationsstelle einerseits und der Zahnoberfläche andererseits stattfindet, wobei das Zahnersatzteil eine Krone ist, wobei die Zahnoberfläche eine Okklusalfläche ist, wobei die Konstruktion der Krone durch eine Ergänzung des Bereichs von der Okklusalfläche bis zu der Präparationsgrenze erfolgt und dadurch eine Außenkontur bestimmt wird, wobei eine Innenkontur der Krone durch einen vorhandenen Zahnstumpf vorgegeben wird.

Das Zahnersatzteil ist in Form digitaler Daten vorhanden und ist so dargestellt, dass es mit CAD-Werkzeugen bearbeitet werden kann. Dadurch ist es möglich, das Zahnersatzteil mit einer Feinstruktur von Erhebungen und Vertiefungen zu versehen und dem Zahnersatzteil so ein natürlicheres Aussehen zu verleihen.

Auch der Zahn liegt in Form von dreidimensionalen Daten vor, wobei es ausreichend sein kann, nur Teile des Zahns bereitzuhalten.

In dem Fall, wo noch kein Zahnersatzteil konstruiert wurde, findet eine Anordnung der Zahnoberfläche an die Präparationsstelle selbst statt, was im Ausführungsbeispiel beschrieben ist. In diesem Fall wird nicht ein bereits als 3D-Datensatz vorhandenes Zahnersatzteil mit einer neuen Oberfläche versehen, sondern ausgehend von der Anordnung der Oberfläche zu der Präparationsstelle findet eine Konstruktion des Zahnersatzteils mittelbar unter Verwendung der Daten der Präparationsstelle einerseits und der Oberfläche andererseits statt. Letzteres ist im Ausführungsbeispiel erläutert.

Vorteilhafterweise erfolgt eine rechnerische Anpassung der Grenzen der einzufügenden Zahnoberfläche an die Oberfläche des Zahnersatzteils oder der Präparationsstelle. Durch Interpolation zwischen der Zahnoberfläche und der Oberfläche des Zahnersatzteils wird ein glatter Übergang der Oberflächen ineinander erzeugt.

Gemäß einer vorteilhaften Weiterbildung der Erfindung ist die Lage der digitalen Zahnoberfläche in dem Zahnersatzteil oder an der Präparationsstelle frei bestimmbar. Dadurch ist eine freie Ausrichtung möglich, ohne dass eine rechnerische Korrelation der Daten den Platz zwangsweise festlegt.

Wenn die digitale Zahnoberfläche vor dem Einfügen gespiegelt wird, kann im Falle des Fehlens einer originalen Oberfläche auf eine Oberfläche zurückgegriffen werden, die spiegelsymmetrisch ist.

Insbesondere eignet sich dazu die von einem kontralateralen Zahn erzeugte einzufügende Oberfläche. Bei einem Zahn im Frontbereich kann die sichtbare Vorderfläche verwendet werden.

Bei einem Zahn im Seitenzahnbereich kann vorteilhafterweise die Kaufläche des kontralateralen Zahns spiegelbildlich verwendet werden.

Vorteilhafterweise erfolgt vor dem rechnerischen Anpassen mit der vorhandenen digitalen Zahnstruktur eine Größenanpassung der einzufügenden Oberfläche an die für das Zahnersatzteil oder für die Präparationsstelle geeigneten Abmessungen. Dadurch ist es möglich, aus Zahnbibliotheken stammende Zähne als Vorlage für eine Zahnoberfläche zu verwenden.

Besonders vorteilhaft ist dieses Verfahren für die Konstruktion eines Veneers.

Aus einem erfindungsgemäß konstruierten digitalen Zahnersatzteil lassen sich dann auf herkömmlichen dentalen Bearbeitungsmaschinen gegenständliche Zahnersatzteile herstellen.

Ein nicht-erfindungsgemäßer Gegenstand ist eine Vorrichtung zur Konstruktion der Oberfläche eines aus dreidimensionalen Daten bestehenden Zahnersatzteils, bei der Mittel zum Auswählen der dreidimensionale Daten einer Zahnoberfläche eines digital gespeicherten Zahns zumindest als Teil der Oberfläche des herzustellenden Zahnersatzteils und zur Anordnung an einem gespeicherten Zahnersatzteil oder ein Bereich eines als dreidimensionale Daten vorliegenden Präparationsstelle vorhanden sind und dass Mittel zur Anpassung des ausgewählten Teils der Zahnoberfläche zumindest bezüglich der Orientierung zum Zahnersatzteil oder zur Präparationsstelle vorgesehen sind.

Vorteilhafterweise sind die Mittel zur Anpassung des ausgewählten Teils der Zahnoberfläche zumindest bezüglich einer der Eigenschaften Größe und Verlauf der Begrenzungslinie vorgesehen.

Weiterhin können Mittel zur rechnerischen Anpassung der Grenzen der einzufügenden Zahnoberfläche an die Oberfläche des Zahnersatzteils vorgesehen sind.

Besonders vorteilhaft ist es, wenn Mittel zur Spiegelung einzufügenden Zahnoberfläche vorgesehen sind.

### Kurze Beschreibung der Zeichnungen

Das erfindungsgemäße Verfahren wird anhand der Zeichnung erläutert. Es zeigen:
- Fig. 1: die Vermessung einer Präparationsstelle unter Verwendung einer Intraoralkamera, die
- Fig. 2A-C: die digitale Darstellung eines zu restaurierenden Zahns, des Nachbarzahns und eines Vorlagezahns im Frontzahnbereich,
- Fig. 3: die eingezeichnete Präparationsgrenze,
- Fig. 4: die Auswahl einer zu kopierende Zahnoberfläche aus einem kontralateralen Frontzahn des zu restaurierenden Zahns,
- Fig. 5: die Positionierung der gespiegelten Zahnoberfläche in die Präparationsstelle an dem zu restaurierenden Zahn,
- Fig. 6: die als Vorlage verwendete Zahnoberfläche mit eingearbeiteten Reflexionen,
- Fig. 7: die eingefügte Kopierfläche in der endgültigen Position vor der Anpassung der Begrenzungslinie der Kopierfläche,
- Fig. 8 A,B: die Anpassung der Begrenzungslinie der Kopierfläche an das konstruierte Zahnersatzteil,
- Fig. 9 A,B: die Verschmelzung und Korrektur der Kopierfläche mit dem konstruierten Zahnersatzteil,
- Fig. 10A: das fertig konstruierte Zahnersatzteil in einer Vorderansicht, die
- Fig. 10B: das fertig konstruierte Zahnersatzteil aus Fig. 10A in einer Rückansicht.

### Ausführungsbeispiel der Erfindung

Am Beispiel der Herstellung eines Veneers wird das erfindungsgemäße Verfahren beschrieben. Eine CAD-Software für die Erstellung von Zahnersatzteilen ermöglicht dazu im Konstruktionsmodus das Kopieren und gegebenenfalls Spiegeln einer beliebigen Zahnoberfläche auf ein Zahnersatzteil, auch bezeichnet als Rekonstruktionskörper. Unter Verwendung der Funktionen Positionierung, Drehung, Größenanpassung sowie einer Bearbeitungsfunktion kann der Benutzer die "Schale" der kopierten Oberfläche mit dem Restaurationskörper verbinden. Vorhandene Zahnkonstruktionen können somit bei geringem Aufwand für die Anpassung der Oberfläche übertragen werden.

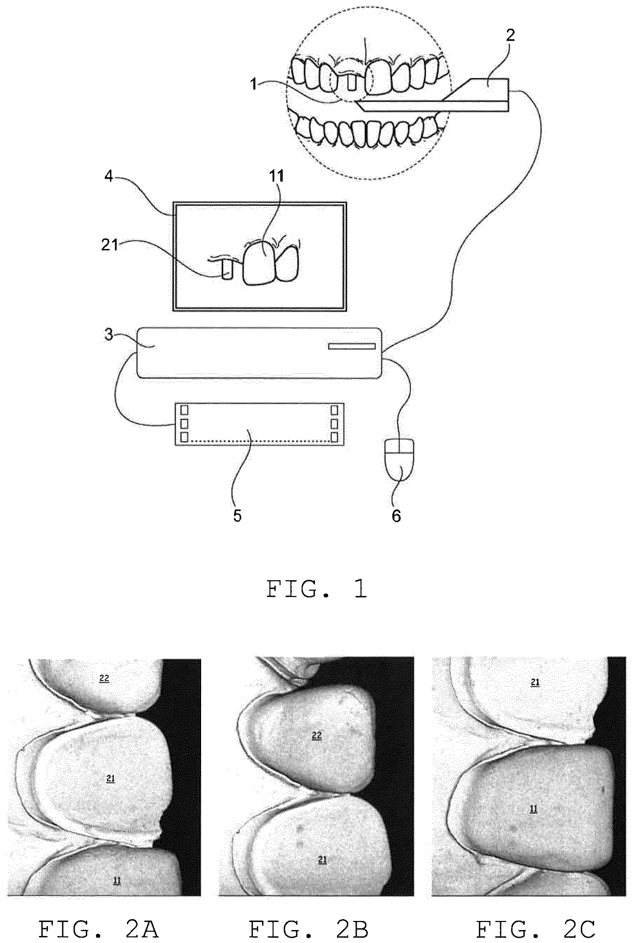

In einem ersten Schritt, dargestellt in Fig. 1, wird die Präparationsstelle 1 unter Verwendung einer Intraoralkamera 2 vermessen und anhand der von einem Rechner 3 ausgewerteten Messdaten wird ein dreidimensionaler Datensatz der Präparationsstelle 1 erzeugt und auf einer Anzeigeeinheit 4 dargestellt, hier der wiederherzustellende Frontzahn 21. Darüber hinaus sind Eingabemittel in Form einer Tastatur 5 und einer Computermaus 6 vorgesehen.

Im vorliegenden Fall ist es zweckmäßig, die Vermessung auf einen Bereich auszudehnen, der über das reine Präparationsgebiet hinausgeht. Dies kann beispielsweise durch weitere Messaufnahmen der Nachbarzähne 11 erfolgen. Die Aufnahme des Zahns 21 erfolgte aus labialer Richtung.

In einer weiteren Aufnahme wird die Zahnoberfläche vermessen, die für die Erstellung der Restauration verwendet werden soll. Dies erfolgt typischerweise aus der gleichen Ansicht wie die Aufnahme der Präparation.

Es ist ausreichend, im vorliegenden Fall die Präparation im Bereich des wiederherzustellenden Frontzahns 21 sowie der Nachbarzähne 11 und 22 zu verwenden, da in diesen in Fig. 2A, 2B und 2C gezeigten Aufnahmen auch die Zahnoberfläche des Zahnes 11 abgebildet ist, die als Oberfläche der Restauration verwendet werden soll - dies gilt jedoch nur für den Bereich der inneren Frontzähne. Für weiter außen liegende Zähne wären viele Kameraaufnahmen notwendig, um dieses Verfahren durchzuführen. Hier wird vorteilhafterweise der präparierte Zahn mit seinen Nachbarzähnen in einer Aufnahmegruppe und die zu kopierende Zahnoberfläche in einer anderen Aufnahmegruppe ausgeführt.

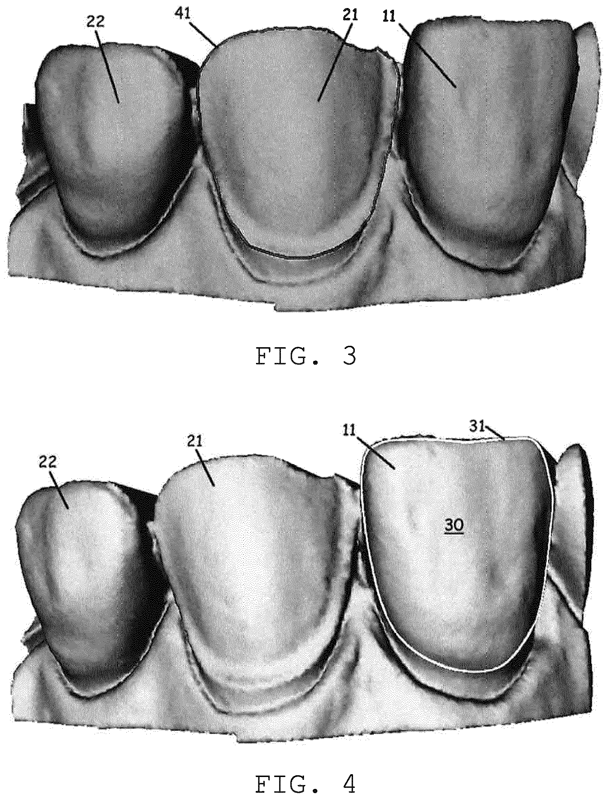

Die Präparationsgrenze 41 des wieder zu erstellenden Frontzahns 21 wird eingezeichnet, siehe Fig. 3. Dies geschieht unter Verwendung der Computermaus 6, kann aber auch beispielsweise mit einem Lichtgriffel oder anderen Eingabegeräten erfolgen. Auch eine automatische Erkennung der Präparationsgrenze 41 kann vorgesehen sein.

Aus dem kontralateralen Frontzahn 11 wird eine zu kopierende Zahnoberfläche 30 ausgewählt, in dem mit den Eingabemitteln eine Bereichsgrenze 31 bestimmt wird, Fig. 4. Die Auswahl der Oberfläche 30 kann überprüft werden, indem der Frontzahn 11 aus verschiedenen Richtungen dargestellt wird.

Zur Übertragung der ausgewählten Oberfläche 30 des Frontzahns 11 auf den herzustellenden Frontzahn 21 ist es erforderlich, die ausgewählte Zahnoberfläche 30 zu spiegeln, wofür ein Auswahldialog gezeigt wird.

Für den Fall, dass keine Okklusionsaufnahmen erstellt wurden, ist die Abfrage einer Spiegelung der ausgewählten Oberfläche nicht erforderlich, da hier nur der kontralaterale Zahn verwendet werden kann und somit bereits feststeht, dass gespiegelt werden muss.

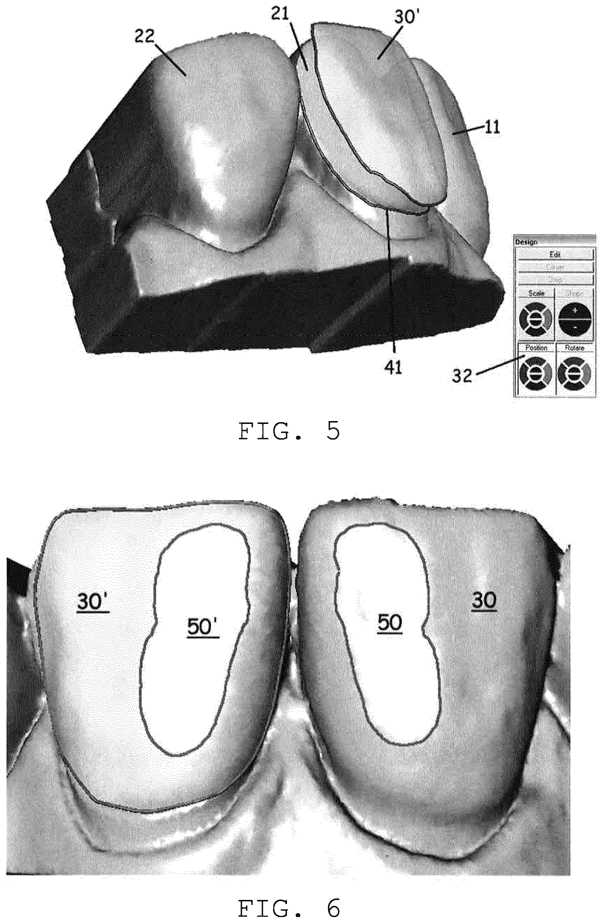

Nach der Spiegelung der Zahnoberfläche 30, die so ausgestaltet ist, dass eine rechte Handfläche als linke Handfläche dargestellt wird, wird die gespiegelte Zahnoberfläche 30' in die Präparationsstelle 1 eingeblendet und ist dort über Eingabemittel 32 z.B. in Form von programmierten Schaltflächen an dem Zahn 21 positionierbar, d.h. in alle Raumrichtungen verschiebbar und drehbar, Fig. 5. Darüber hinaus kann die Größe verändert werden, so dass eine Anpassung an den Nachbarzahn 22 möglich ist.

Im Ausführungsbeispiel sind in die als Vorlage verwendete Zahnoberfläche 30 Reflexionen eingearbeitet, welche zum Beispiel als ein zusammenhängendes Gebiet 50 identifizierbar sind, dargestellt in Fig. 6. Dieses Gebiet 50 kann auch in der kopierten Zahnoberfläche 30' als Gebiet 50' widergegeben werden, so dass eine Ausrichtung der beiden Gebiete 50, 50' zueinander möglich ist, und zwar sowohl bezüglich der Lage in horizontaler und vertikaler Richtung und der Schräglage als auch bezüglich der Ausdehnung, also der Größe.

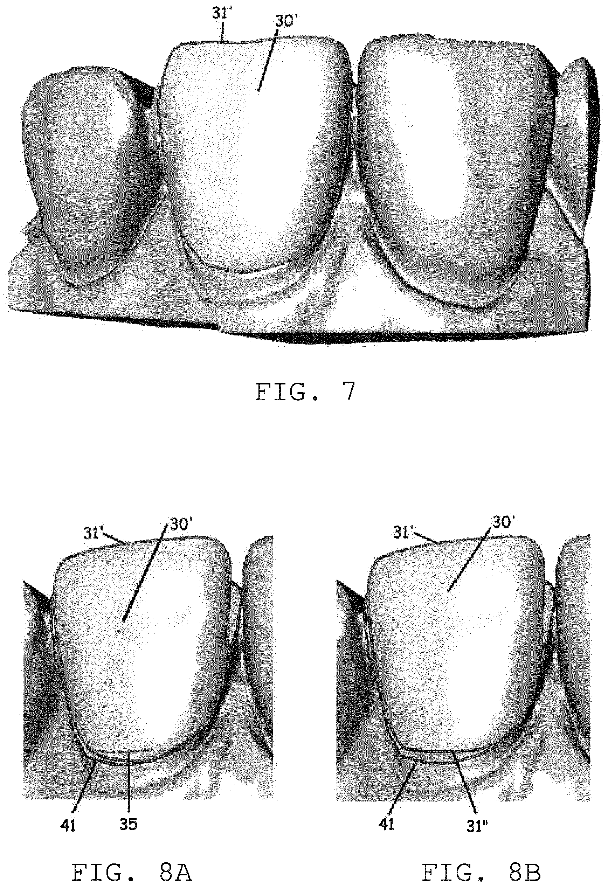

In Fig. 7 ist die eingefügte Oberfläche 30' in der endgültigen Position am berechneten Zahnersatzteil dargestellt, so dass eine Anpassung der Begrenzungslinie 31' der Oberfläche 30' unter Berücksichtigung der Präparationsgrenze möglich ist.

Dies geschieht über die üblichen Bearbeitungswerkzeuge, siehe Fig. 8A, 8B, wobei die Begrenzung 31' der Kopierfläche 30' durch Neuzeichnen einen Linienabschnitts 35 verändert wird. Dadurch wird die Kopierfläche 30' lokal kleiner bzw. größer gemacht. Zu Kontrollzwecken ist die Präparationsgrenze 41 dargestellt.

Nach dieser Anpassung kommt es zu einer bildlichen Verschmelzung der erstellten Oberfläche 30" mit der Präparation 21, wodurch das herzustellende Zahnersatzteil gebildet wird. Dabei werden die Oberflächen der Präparation 21 zur Bildung der der Präparation zugewandten Oberfläche des Zahnersatzteils verwandt und es kommt zu einer rechnerischen Ergänzung, so dass anschließend ein erster Datensatz für ein noch zu überarbeitendes Zahnersatzteil vorliegt.

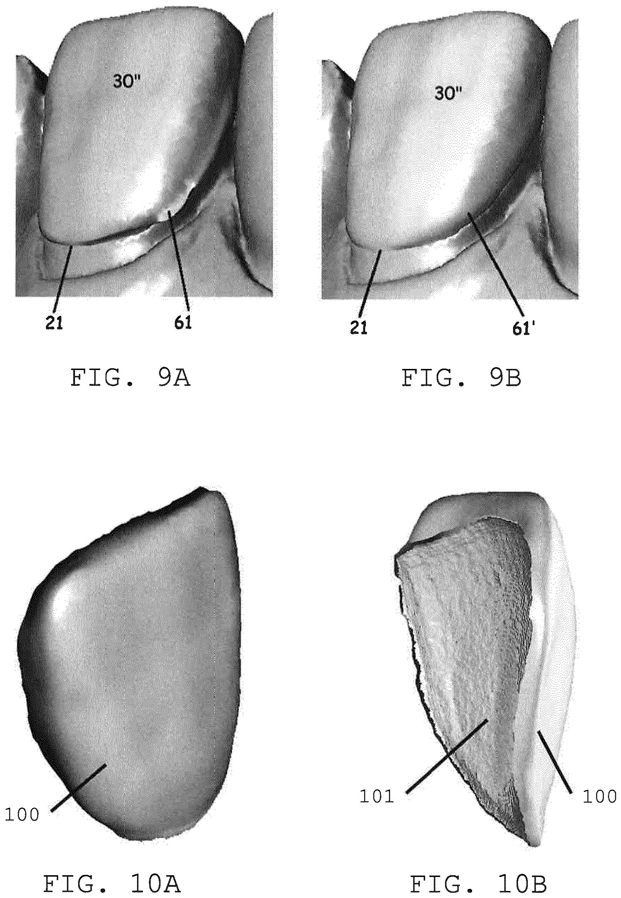

In Fig. 9A ist ein angezeigter Vorschlag des mit der Präparation 21 verbundenen Zahnersatzteils dargestellt. Dieser Vorschlag kann wiederum bearbeitet werden, um eine Anpassung der Übergänge 61 zu erzielen. Die Änderung kann im gesamten Bereich zwischen der Oberfläche 30" und der Präparation 21 notwendig sein oder nur in einem Teilbereich davon. Das Ergebnis dieser Anpassung ist in Fig. 9B abgebildet, wo der Übergang 61' deutlich glatter verläuft.

In Fig. 10A ist das fertig konstruierte Zahnersatzteil in Form eines Veneers 100 aus labialer Richtung gesehen dargestellt, in Fig. 10B ist die Rückseite 101 des Zahnersatzteils aus bukkaler Richtung gesehen dargestellt. Das Zahnersatzteil wird mit dieser Rückseite 101 am Frontzahn befestigt.

Die Konstruktion einer Krone erfordert eine Aufnahme aus Okklusalrichtung und die Festlegung der Okklusalfläche, die auch durch Kopieren gewonnen werden kann, und anschließend die Ergänzung des Bereichs von der Okklusalfläche bis zur Präparationsgrenze. Damit ist das herzustellende Zahnersatzteil in seinen Außenkonturen bestimmt, die Innenkontur wird durch den vorhandenen Zahnstumpf vorgegeben, so dass insgesamt die Form des Zahnersatzteils bestimmt ist. Dieses konstruierte Zahnersatzteil kann dann mit üblichen Verfahren hergestellt werden.

Mit diesem Konstruktionsverfahren wird es dem Benutzer möglicht, eine beliebige, auch selbst definierte Zahnoberfläche wie beispielsweise die Labialfläche von Frontzähnen oder die Kaufläche von Seitenzähnen sowohl direkt als auch spiegelbildlich zu kopieren und als Oberfläche für eine Restauration zu verwenden.

Dabei kann der Benutzer die Originaloberfläche des Zahns vor der Präparation verwenden, wobei hier im Gegensatz zu den bekannten Korrelationsverfahren die Lage der Zahnoberfläche frei bestimmbar ist und damit Fehlstellungen unter Beibehaltung der Oberflächendetails korrigiert werden können.

Weiterhin kann als Oberfläche der Restauration der kontralaterale Zahn verwendet werden. Damit kann der Benutzer eine höchstmögliche Symmetrie insbesondere im Frontzahnbereich erzeugen. Im Seitenzahnbereich ist die Kaufläche des kontralateralen Zahns die geeignete Vorlage für die Restauration, da diese Kaufläche am besten zu den anderen Zähnen des Kiefers und damit auch in den Gegenkiefer passt.

Darüber hinaus ist es möglich, beliebige Vorlagen zu verwenden, um beispielsweise bei der Versorgung des gesamten Frontzahnbereichs auch dann eine höchstmögliche Symmetrie zu erzeugen, wenn nicht die originalen Zahnoberflächen verwendet werden.

So kann zum Beispiel der Frontzahn der rechten Seite unmittelbar und der Frontzahn der linken Seiten mit einer gespiegelten Vorlage versorgt werden, wobei durch eine Skalierung der kopierten Flächen eine eventuell notwendige Größenanpassung erfolgt.

Damit wird erstmals die Möglichkeit geboten, ohne großen manuellen oder künstlerischen Aufwand ästhetische und funktionelle Restaurationen besonders im Frontzahnbereich zu erstellen, die alle Anforderungen bezüglich der Symmetrie erfüllen.

## Patentansprüche

1. Verfahren zur Konstruktion der Oberfläche eines aus dreidimensionalen Daten bestehenden Zahnersatzteils, wobei das Zahnersatzteil eine Krone ist, wobei eine Innenkontur der Krone durch einen vorhandenen Zahnstumpf vorgegeben wird, wobei dreidimensionale Daten einer Zahnoberfläche (30) eines gespeicherten Zahns (11) zumindest als Teil der Oberfläche des herzustellenden Zahnersatzteils verwendet werden, wobei die genannte Zahnoberfläche (30) eine Okklusalfläche ist, wozu die Zahnoberfläche (30) in ihrer Ausdehnung zunächst bestimmt wird und danach im Bereich einer als dreidimensionale Daten vorliegenden Präparationsstelle (1; 21) durch Kopieren und/oder durch Spiegeln angeordnet wird, **gekennzeichnet dadurch dass** eine Präparationsgrenze (41) des zu erstellenden Zahnersatzteils manuell durch Eingabegeräte beispielsweise einer Computermaus (6) oder eines Lichtgriffel eingezeichnet wird, wobei die Lage der digitalen Zahnoberfläche (30) in dem Zahnersatzteil oder an der Präparationsstelle (1; 21) in mindestens einer Raumachse und/oder einer Drehrichtung bestimmbar ist, wobei durch eine Skalierung der kopierten Zahnoberfläche (30) eine eventuell notwendige Größenanpassung erfolgt, wobei eine Anordnung der Zahnoberfläche (30) an die Präparationsstelle (1, 21) festgelegt wird, wobei ausgehend von der festgelegten Anordnung der Zahnoberfläche (30) zu der Präparationsstelle (1, 21) eine Konstruktion des Zahnersatzteils mittelbar unter Verwendung der Daten der Präparationsstelle (1, 21) einerseits und der Zahnoberfläche (30) andererseits stattfindet, wobei die Konstruktion der Krone durch eine Ergänzung des Bereichs von der Okklusalfläche (30) bis zu der eingezeichneten Präparationsgrenze (41) erfolgt und dadurch eine Außenkontur bestimmt wird.

2. Verfahren nach Anspruch 1, **dadurch gekennzeichnet**, die Lage der digitalen Zahnoberfläche (30) in dem Zahnersatzteil oder der Präparationsstelle (1; 21) bezüglich der Raumachsen und/oder der Drehrichtungen frei bestimmbar ist.

3. Verfahren nach Anspruch 1 oder 2, **dadurch gekennzeichnet, dass** die digitale Zahnoberfläche (30) vor dem Einfügen gespiegelt wird.

4. Verfahren nach einem der Ansprüche 1 bis 3, **dadurch gekennzeichnet, dass** die einzufügende Oberfläche (30', 30") von einem kontralateralen Zahn (11) erzeugt ist.

5. Verfahren nach einem der Ansprüche 1 bis 4, **dadurch gekennzeichnet, dass** die Kaufläche eines kontralateralen Zahns im Seitenzahnbereich spiegelbildlich verwendet wird.

6. CAD-Software für die Erstellung von Zahnersatzteilen gemäß des Verfahrens nach einem der Ansprüche 1 bis 5.

## Claims

1. A method for producing the surface of a dental restoration consisting of three-dimensional data, wherein the dental restoration is a crown, wherein an inner contour of the crown is specified by an existing tooth stump, wherein three-dimensional data of a tooth surface (30) of a recorded tooth (11) are used for at least part of the surface of the dental restoration part to be produced, wherein said tooth surface (30) is an occlusal surface, for which purpose the tooth surface (30) is first determined in its extent and is then arranged in the area of a preparation site (1, 21) available as three-dimensional data via copying and/or by mirroring, **characterised in that** a preparation margin (41) of the dental restoration to be created is delineated manually using input devices, for example a computer mouse (6) or a light pen, wherein the position of the digital tooth surface (30) in the dental restoration or at the preparation site (1, 21) can be determined in at least one spatial axis and/or one direction of rotation, wherein any necessary size adjustment is carried out by scaling the copied tooth surface (30), wherein an arrangement of the tooth surface (30) is defined at the preparation site (1, 21), wherein, based on the defined arrangement of the tooth surface (30) to the preparation site (1, 21), the dental restoration is produced indirectly using the data from the preparation site (1, 21) on the one hand and the tooth surface (30) on the other hand, wherein the production of the crown is carried out by supplementing the region between the occlusal surface (30) and the delineated preparation margin (41) and an outer contour is thereby determined.

2. The method according to Claim 1, **characterised in that** the position of the digital tooth surface (30) in the dental restoration or the preparation site (1, 21) can be freely determined with respect to the spatial axes and/or the directions of rotation.

3. The method according to Claim 1 or 2, **characterised in that** the digital tooth surface (30) is mirrored before insertion.

4. The method according to any one of Claims 1 to 3, **characterised in that** the surface (30', 30") to be inserted is produced by a contralateral tooth (11).

5. The method according to any one of Claims 1 to 4, **characterised in that** the mirror image of a chewing surface of a contralateral tooth in the posterior region is used.

6. A CAD software for the creation of dental restorations in accordance with the method according to any one of Claims 1 to 5.

## Revendications

1. Procédé de construction de la surface d'une prothèse dentaire composée de données tridimensionnelles, dans lequel la prothèse dentaire est une couronne, dans lequel un contour intérieur de la couronne est prédéfini par un moignon dentaire existant, dans lequel des données tridimensionnelles d'une surface dentaire (30) d'une dent (11) mémorisée sont utilisées, au moins partiellement, en tant que partie de la surface de la prothèse dentaire à fabriquer, dans lequel ladite surface dentaire (30) est une surface occlusale, à cet effet, la surface dentaire (30) étant d'abord déterminée dans son étendue et ensuite disposée dans la zone d'un site de préparation (1, 21) existant en tant que données tridimensionnelles par copie et/ou par réflexion, **caractérisé en ce qu'**une limite de préparation (41) de la prothèse dentaire à produire est tracée manuellement à l'aide d'appareils de saisie, par exemple, une souris d'ordinateur (6) ou un crayon optique, dans lequel la position de la surface dentaire (30) numérique dans la prothèse dentaire ou au niveau du site de préparation (1, 21) peut être déterminée dans au moins un axe spatial et/ou un sens de rotation, dans lequel un ajustement de taille nécessaire est effectué par une mise à l'échelle de la surface dentaire (30) copiée, dans lequel une disposition de la surface dentaire (30) sur le site de préparation (1, 21) est définie, dans lequel, à partir de la disposition définie de la surface dentaire (30) par rapport au site de préparation (1, 21), une construction de la prothèse dentaire s'effectue indirectement à l'aide des données du site de préparation (1, 21) d'une part et de la surface dentaire (30) d'autre part, dans lequel la construction de la couronne est effectuée par un complément de la zone s'étendant de la surface occlusale (30) à la limite de préparation (41) tracée et un contour extérieur est ainsi déterminé.

2. Procédé selon la revendication 1, **caractérisé en ce que** la position de la surface dentaire (30) numérique dans la prothèse dentaire ou au niveau du site de préparation (1, 21) peut être déterminée librement par rapport aux axes spatiaux et/ou aux sens de rotation.

3. Procédé selon la revendication 1 ou 2, **caractérisé en ce que** la surface dentaire (30) numérique est réfléchie avant l'insertion.

4. Procédé selon l'une quelconque des revendications 1 à 3, **caractérisé en ce que** la surface (30', 30") à insérer est réalisée à partir d'une dent (11) controlatérale.

5. Procédé selon l'une quelconque des revendications 1 à 4, **caractérisé en ce que** la surface de mastication d'une dent controlatérale dans la zone dentaire latérale est utilisée de manière inversée.

6. Logiciel de CAO pour la production de prothèses dentaires selon le procédé selon l'une quelconque des revendications 1 à 5.
